# EUROPEAN PATENT SPECIFICATION

(11) **EP 1 926 224 B1**
(45) Date of publication and mention of the grant of the patent: **06.05.2015**
(21) Application number: 06807852.6
(22) Date of filing: 13.07.2006
(51) Int. Cl.: H04W 52/12, H04W 52/14, H04W 52/24

(54) **OUTER-LOOP POWER CONTROL METHOD AND DEVICE FOR WIRELESS COMMUNICATION SYSTEMS**
AUSSENSCHLEIFEN-LEISTUNGSSTEUERUNGSVERFAHREN UND VORRICHTUNG FÜR DRAHTLOSE KOMMUNIKATIONSSYSTEME
PROCÉDÉ ET DISPOSITIF DE RÉGULATION DE PUISSANCE PAR BOUCLE EXTERNE POUR SYSTÈMES DE COMMUNICATION SANS FIL

(30) Priority: 17.08.2005 ES 200502057
(43) Date of publication of application: 28.05.2008
(73) Proprietor: TOT POWER CONTROL, S.L., 28023 Madrid (ES)
(72) Inventor: CAMPO CAMACHO, Alfonso, E-28023 Madrid (ES); BLANCO CARMONA, Miguel, E-28023 Madrid (ES); MENDO TOMAS, Luis, E-28023 Madrid (ES); HERNANDO RABANOS, Jose, María, E-28023 Madrid (ES); LOPEZ MEDRANO, Alvaro, E-28023 Madrid (ES)
(74) Representative: Carpintero Lopez, Francisco
(86) International application number: PCT/ES2006/000402
(87) International publication number: WO 2007/020304

(56) References cited:
- EP-A1- 1 054 518
- US-A1- 2003 148 769
- US-A1- 2003 148 769
- US-A1- 2004 058 699
- TOP OPTIMIZED TECHNOLOGIES: "Test cases for the convergence speed of the Outer Loop Power Control for Low BLER Target services", 3GPP DRAFT; R4-040613, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Yokohama, Japan; 20041111, 11 November 2004 (2004-11-11), XP050173380, [retrieved on 2004-11-11]
- GRIMM ET AL.: 'Robust linear anti-windup synthesis for recovery of unconstrained performance' INT. J. ROBUST NONLINEAR CONTROL 2004 27 May 2004, XP003008952
- GRIMM G. ET AL.: 'Antiwindup for stable linear systems with input saturation: an lmi-based synthesis' IEEE TRANSACTIONS ON AUTOMATIC CONTROL vol. 48, no. 9, September 2003, XP011100756

## Description

### Object of the Invention

The present invention can be applied within the field of telecommunications and especially in the industry dedicated to the manufacture of both base stations and mobiles in cellular infrastructures for wireless communication systems.

More particularly, the invention described herein within the field of communications relates to a method and device for the outer-loop power control system in a cellular mobile telephone network.

One object of the invention is to allow power control by means of the outer-loop process including the detection of normal operation, wind-up and unwinding modes of said outer loop and, for the latter unwinding mode, it provides the suitable modification of the desired signal-to-interference ratio target in order to rapidly adjust it to the outer-loop power control operation in normal mode.

Other objects of the invention are to reduce the convergence time of outer-loop power control at the end of the wind-up mode and to prevent unnecessary interferences reducing the capacity of a wireless communication system when the inevitable wind-up and unwinding phenomena occur.

### Background of the Invention

In January 1998, the European Telecommunications Standards Institute (ETSI) selected the basic technology for the Universal Mobile Telecommunications System (UMTS) (see ETSI, "The ETSI UMTS Terrestrial Radio Access (UTRA) ITU-R RTT Candidate Submission", June 1998). The main radio interface proposed was the Wideband Code Division Multiple Access (WCDMA) protocol, the characteristics of which offer the chance to completely meet third generation (3G) mobile telephony requirements. Due to the high data transmission rate and the increasingly demanding quality of service (QoS) requirements in 3G, the development of new planning strategies is necessary. The power control system strategy, particularly that of the process used to implement the outer loop of said system, is probably the most studied of these strategies.

The mentioned power control system is generally described below, since the outer-loop functionality, for which this invention proposes a method, is a result of other components of the system.

The power control system in WCDMA-based cellular networks is necessary given that it is an interference-limited technology, due to the fact that all the users share the same frequency spectrum and their codes are not completely orthogonal (see Holma & Toskala: "WCDMA for UMTS, Radio Access for Third Generation Mobile Communications", John Wiley & Sons.).

The ultimate purpose of the power control system in WCDMA is to reach the quality of service required in a particular link, a downlink from the base station to the mobile or terminal equipment, or an uplink from the mobile to the base station, with a minimum transmitted power level (the invention is focused on precisely this aspect).

The main objectives of the power control system in WCDMA networks are:
- Cancellation of the near - far effect: in the event that all the mobile stations transmit the same power without taking into account the distance or the fading to the base station, the mobiles closest thereto would mean significant interference for the farthest terminals.
- Protection against deep fading.
- Minimization of the interference in the network with the subsequent improvement in capacity.
- Longer duration of the battery of the mobile stations.

A power control system for WCDMA is implemented as a whole by means of three different processes:
- By open loop: during the random access process at the beginning of a connection, the mobile/base station estimates the power loss in the uplink/downlink and adjusts its transmission power depending on such loss.
- By closed or inner loop: also called fast power control (1500 Hz), made up of the following three steps:
   1) The corresponding receiver terminal (the base station or the mobile unit) compares the value of the received desired signal-to-interference ratio, or SIR_{rec}, with the desired signal-to-interference ratio target (SIR_{target}) depending on the quality of service required for that specific link and which is set by the outer-loop process described below.
   2) The same receiver terminal sends power control bits indicating that the transmission power must be increased if SIR_{rec} < SIR_{target}, or decreased if SIR_{rec} > SIR_{target}, by a certain value (normally 1dB).
   3) The transmitting unit (base station or mobile) increases or decreases its power by the previously set amount.
- By outer loop (OLPC, Outer-loop Power Control): it is much slower than the closed loop (10-100Hz) and establishes the desired signal-to-interference ratio target (SIR_{target}) enabling a predetermined quality target to be maintained. A criterion or a measurement of the quality of a link is the frame error rate (FER) or equivalently, the block error rate (BLER), which is a function of the desired signal-to-interference ratio (SIR). Given that the inner loop aids in maintaining the received desired signal-to-interference ratio close to the signal-to-interference ratio target (SIR_{target}), the block error rate (BLER) is ultimately determined by this target value. Thus, in order to reach a quality of service in a certain fading environment, the target (SIR_{target}) needs to be adjusted to the suitable value for that environment.

The received desired signal-to-interference ratio can occasionally be always lower than the desired signal-to-interference ratio target (SIR_{target}), either because the channel conditions worsen abruptly, whereby the receiving unit does not properly receive the power control bits sent by the transmitting unit, or because the transmitting unit has reached the maximum power it has available for that link.

The result of this circumstance is that the received frame error rate is greater than the target frame error rate, i.e. the quality of the link is degraded. Nevertheless, this degradation may not be large enough for the communication to be cut off, such that this communication is maintained although with a quality lower than that desired.

If the communication continues, even though it does so with a degraded quality, the so-called wind-up mode or condition of the outer loop can occur: The outer-loop power control (OLPC) method will increase the desired signal-to-interference ratio target (SIR_{target}) in order to attempt reaching the target quality criterion, i.e. the target frame error rate, but the received desired signal-to-interference ratio will not be able to follow the desired signal-to-interference ratio target (SIR_{target}) for the aforementioned reasons (worsening of the channel conditions or saturation of the transmitting unit).

In this situation, the outer-loop power control (OLPC) method will continue to indefinitely increase the desired signal-to-interference ratio target (SIR_{target}) up to a much higher level than the level it had before the abrupt worsening of the propagation conditions or the power limitation.

When the conditions subsequently improve or the power limitation disappears, the received desired signal-to-interference ratio will at last be able to reach the desired signal-to-interference ratio target (SIR_{target}), which will then have a much higher value than that corresponding to the target frame error rate. As a result, the received frame error rate that is being obtained at that time will be much lower than the necessary rate and therefore the interference in the cannel will be increasing, reducing the capacity and deteriorating the quality of other links.

This unwanted situation will be maintained until the outer-loop power control (OLPC) method achieves decreasing the desired signal-to-interference ratio target (SIR_{target}) to the suitable value, i.e. to the value achieving the target frame error rate.

This process for decreasing for the desired signal-to-interference ratio target (SIR_{target}), after the described condition has ended, i.e. after the wind-up, is known as the unwinding mode or condition of the outer loop, and the present invention proposes a method for precisely this mode.

The problem is that due to the characteristics of the outer-loop power control (OLPC) algorithm that is usually used (see Holma H., Toskala A., "WCDMA for UMTS", Wiley, 2002) the process for decreasing the desired signal-to-interference ratio target (SIR_{target}) is very slow. This slow convergence is due to the fact that the down step size used by said algorithm is, measured in dBs, of the order of the target frame error rate (typical values are 10⁻² for the voice service and 10⁻³ for the videoconference service), i.e. it is very small, which means that tens of seconds are necessary for each down dB.

It is interesting to point out that there is a disparity between the down step size and the up step size of the desired signal-to-interference ratio target (SIR_{target}) set by the outer-loop power control (OLPC) method. In fact, the up step is much greater than the down step size; while as mentioned, the latter is the order of the target frame error rate in dBs, the up step has a size of about 1dB. This is relevant because it means that the outer-loop power control (OLPC) method can react rapidly in situations involving an increase of the desired signal-to-interference ratio target (SIR_{target}) and this is taken into account in the present invention.

Due to that described in the previous paragraph, various solutions have been set forth for preventing the wind-up condition of the outer loop of the power control (see patent application US 2003148769). The mentioned document proposes the following wind-up detection method: a wind-up situation is declared when the difference between the desired signal-to-interference ratio target (SIR_{target}) and the received desired signal-to-interference ratio exceeds a certain margin or threshold. Once the wind-up mode has been detected, different mechanisms are established in US 2003148769 for limiting the value of the desired signal-to-interference ratio target (SIR_{target}), for the time the mentioned wind-up situation lasts. Finally, also in this same patent application, detection criteria are established for the aforementioned unwinding process, i.e. the process marking the end of wind-up and starting when the received desired signal-to-interference ratio can reach the desired signal-to-interference ratio target (SIR_{target}).

Nevertheless, in the power control described by US 2003148769, no criterion is established for the actual unwinding process, i.e. only a possible way of how it could be detected is defined but a specific operation of the outer loop in this mode is not specified, but rather it is assumed that it is the one corresponding to the normal operation mode of this loop or, in other words, a very slow decrease with subsequent interference increase in the channel, capacity reduction and quality deterioration of other links, as explained above.

It should be noted that the existence of a method for preventing wind-up of the outer loop reduces the subsequent unwinding process, as achieved in the mentioned example of US 2003148769, but such process is not completely prevented.

Another example of determining the desired signal-to-interference ratio target (SIR_{target}) by an anti-windup procedure is disclosed in US 2004/058699, which describes a selective updating of SIR_{target} based on the relationship of a measured SIR, which is a filtered SIR value for the last slot of the nth Transmission Time Interval (TTI), to the desired SIR_{target}. In particular, the measured SIR is compared to a predefined range of values and the SIR_{target} is updated if the measured SIR value is within this predefined range or if the updating would move the SIR_{target} to a value closer to the measured SIR. Also, US 2004/058699 discloses a block error rate anti-windup procedure which selectively sets the block error rate utilized in updating the valueof SIR_{target} based on whether an anti-windup value of SIR_{target} has been used for the preceding TTI. In any case, the value of SIR_{target} keeps frozen after the detection of wind-up and it is not updated until the wind-up ends, i.e., when unwinding begins.

### Description of the Invention

The present invention solves, among others, the previously mentioned problems in each and every one of the different aspects set forth in the background.

The proposed outer-loop power control method and device for mobile communications systems, especially designed for third generation technologies (3G) based on one or several of the standardized Code Division Multiple Access (CDMA) protocols, modify the desired signal-to-interference ratio target (SIR_{target}) at the end of the wind-up condition, or in other words, once the unwinding process has started.

More specifically, by means of the method and device of the invention, at the beginning of the unwinding the mentioned target (SIR_{target}) is equaled to a value that is suitably close to the value that the desired signal-to-interference ratio target (SIR_{target}) had prior to the beginning of the wind-up. Such suitable value whereby the invention establishes said desired signal-to-interference ratio target (SIR_{target}) when the outer-loop power control enters the unwinding mode is as close as possible to the established value that the desired signal-to-interference ratio target (SIR_{target}) had prior to entering the wind-up condition, so that the power control continues the variation determined in the normal mode immediately after the unwinding state of the outer loop has ended.

With this suitable modification of the desired signal-to-interference target (SIR_{target}) carried out by the invention at the beginning of the unwinding in outer-loop power control (OLPC), the mentioned target (SIR_{target}) and therefore the power is rapidly adjusted to the outer loop in normal mode.

The reason for modifying the desired signal-to-interference target (SIR_{target}) at the beginning of the unwinding situation of the outer loop and equaling it to a value that is as close as possible to the value that it had at the beginning of the wind-up mode is due to the fact that conventional outer-loop power control (OLPC) starts operating defectively from the time that these wind-up and subsequent unwinding phenomena start. In reality, from the time the wind-up detection takes place until its end, the mentioned outer-loop power control (OLPC) is not allowed to operate in normal mode, i.e. the desired signal-to-interference target (SIR_{target}) does not continue to be increased indefinitely. And in short, what this invention proposes for the outer-loop power control method at the end of the wind-up, i.e. at the beginning of the unwinding, is to modify the desired signal-to-interference target (SIR_{target}), equaling it to a value that is as close as possible to the value it had when the actual outer-loop power control (OLPC) stops operating in normal mode, i.e. prior to entering the wind-up mode.

One aspect of the invention is thus an outer-loop power control method for wireless communication systems which, based on a received data signal from a base station or mobile, comprises the following phases:
i) estimating the received desired signal-to-interference ratio based on a data signal coming from a base station or from a mobile,
ii) establishing a desired signal-to-interference ratio target (SIR_{target}) that is close to a required desired signal-to-interference ratio (SIR_{required}) during the normal mode of the outer loop,
iii) detecting the beginning of the wind-up mode of the outer loop,
iv) establishing the desired signal-to-interference ratio target (SIR_{target}) during the wind-up state of the outer loop,
v) detecting the beginning of the unwinding mode of the outer loop,
vi) modifying the desired signal-to-interference ratio (SIR_{target}) at the beginning of the unwinding of the outer loop, in order to finally adjust it to outer-loop power control in normal mode.

As a result of the new unwinding mechanism proposed by this invention within the outer-loop power control method, the desired signal-to-interference ratio target (SIR_{target}) thus established at the beginning of this condition will be equal to that which is as close as possible to the desired signal-to-interference ratio target (SIR_{target}) suitable for new propagation conditions, i.e. any one meeting the corresponding target frame error rate.

The invention thus presents a considerable improvement compared to that described in the aforementioned patent application US 2003148769, as it considerably reduces the time the unwinding process lasts and thus reduces the interference in the communication channel, consequently increasing its capacity and the quality of other links.

Another aspect of the invention relates to an outer-loop power control device for wireless communication systems, comprising at least one programmable electronic device operating according to the previously described method. The programmable electronic device can be a general purpose processor, a digital signal processor (DSP), an application-specific integrated circuit (ASIC) and a programmable card (FPGA) or any combination of the above. The general purpose processor can preferably be a microprocessor or other possible alternatives: a conventional processor, a microcontroller or any state machine in general. The programmable electronic device can even consist of a combination of multiple microprocessors, a microprocessor and one or more DSP devices, or any other configuration in which the execution of the different phases comprised in the method which has been described is distributed in series or in parallel.

The proposed outer-loop power control device for wireless communication systems can optionally comprise a radiofrequency receiver which can receive the data signal coming from a base station or mobile. A radiofrequency transmitter which can send the power control information to the corresponding base station or mobile can also be additionally incorporated in said device. Such outer-loop power control device can thus be incorporated in a wireless communications network controller, or in the user terminal equipment or mobile of the wireless communications systems.

Final aspects of the invention include a Radio Network Controller ((RNC), including the logics for processing calls) and a mobile station (UE: user equipment or remote terminal), each apparatus comprising the outer-loop power control device for wireless communication systems thus described.

The invention can be applied to any wireless communications system supporting one or more CDMA protocol standards, such as the WCDMA, IS-95, CDMA2000 standards, the HDR specification, etc.

### Description of the Drawings

To complement the description which is being made and with the aim of aiding to better understand the features of the invention according to a preferred practical embodiment thereof, a set of drawings is attached as an integral part of said description in which the following has been shown with an illustrative and non-limiting character:
Figure 1 shows a part of a mobile communications system as known in the state of the art, including the elements of a cellular infrastructure, user mobile terminal, base station and remote network controller, related to the object of the invention.
Figure 2 shows a block diagram, according to the state of the art, of part of a base station or of a mobile related to the invention.
Figure 3 shows a block diagram of the steps taking place in the controller element of a base station or of a mobile included in the previous figure and corresponding to the unwinding method object of the invention.
Figure 4 shows a graph of the evolution of the desired signal-to-interference ratio target (SIR_{target}) over time according to a possible embodiment of the method of the invention, according to which there is wind-up mode detection margin which must be subtracted from said desired signal-to-interference ratio target (SIR_{target}) at the beginning of the unwinding mode of the outer loop.

### Preferred Embodiment of the Invention

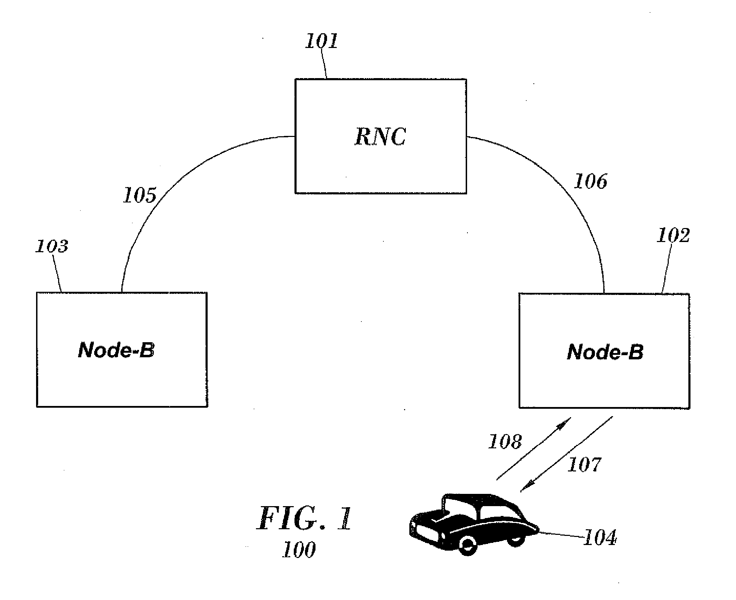

Figure 1 shows a part (100) of a WCDMA mobile communications system. Apart from the invention, the elements shown in the figure are well known and not described in detail: One element of interest is the user terminal equipment or mobile station (104) which is shown by means of the vehicle icon; the WCDMA mobile communications system also comprises several base stations (102, 103) or Nodes-B in the UMTS network, containing embedded software programs, interface cards, memories and processors. This part of the system includes a radio network controller (101) or RNC providing call processing, among other functions. The two base stations (102, 103) and the mobile station (104) represent endpoints of the cordless interface. Each base station (102, 103) is associated to an RNC (101) through land lines (105, 106). Hereinafter, it is assumed that the mobile station (104) communicates with the base station (102) by means of the downlink data signal (107) and of the uplink data signal (108).

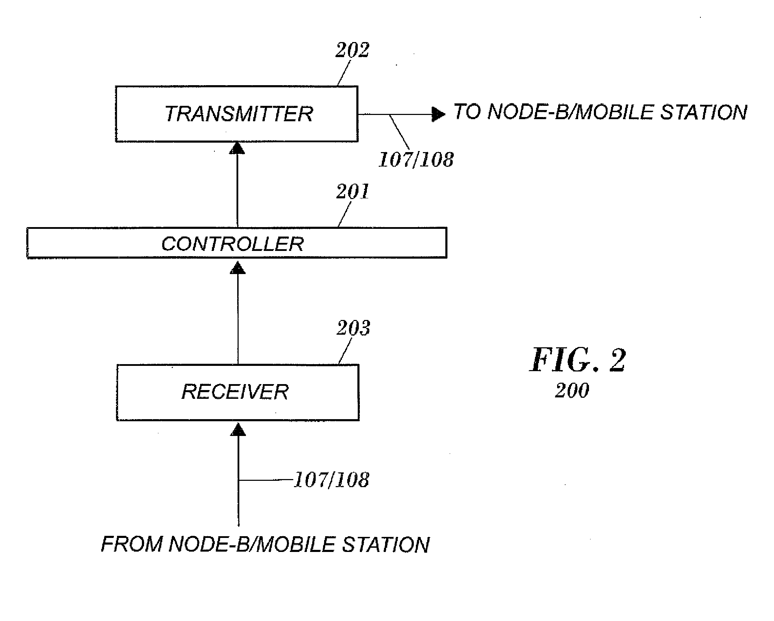

Figure 2 shows the part (200) of both stations, base station (102) and mobile station (104), including the principles on which this invention is based. The known aspects of the elements shown in the mentioned figure are not discussed because a radiofrequency transmitter (202) and receiver (203) are described in detail in the state of the art. Both the base station (102) and the mobile station (104) contain a controller (201), a transmitter (202) and a receiver (203). Thus, in the case of the base station (102), the received signal corresponds to the uplink (108) and in the case of the mobile station (104), the signal that it receives is that of the downlink (107), both of them reach the controller (201) through the receiver (203). The power control device object of the invention is incorporated in the controller (201) and sends through the transmitter (202) a command indicating to the receiving station at that time to increase or decrease its power, depending on the result of the outer-loop power control method described below, the purpose of which is to establish the desired signal-to-interference ratio target (SIR_{target}) acting as threshold in the closed loop for power control.

The outer-loop power control method of the invention incorporates wind-up situation detection mechanisms, therefore once such situation is detected, the outer loop leaves the normal mode and enters a wind-up operation mode, according to known outer-loop power control algorithms in the distinguished situations: normal and wind-up mode.

The method object of the invention also incorporates detection mechanisms for the end of this wind-up phenomenon, coinciding with the beginning of the unwinding process by the definitions mentioned above.

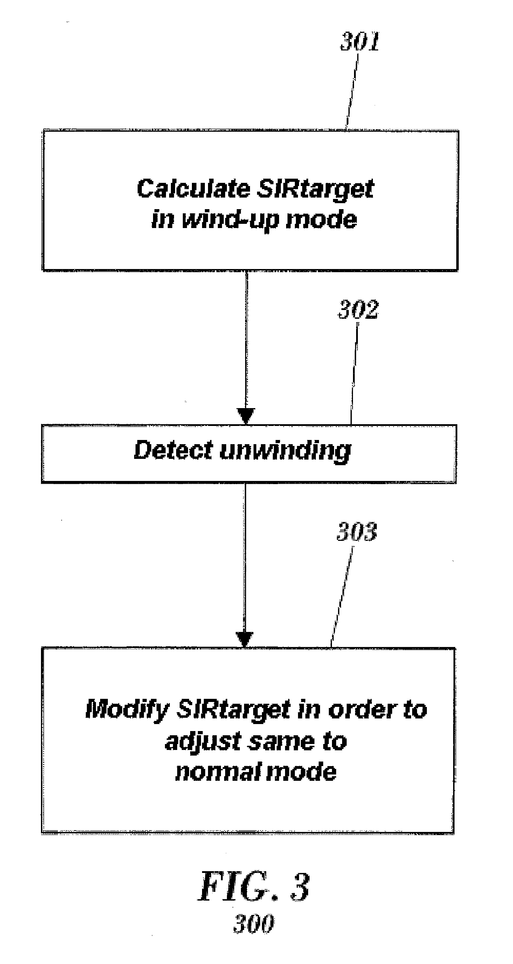

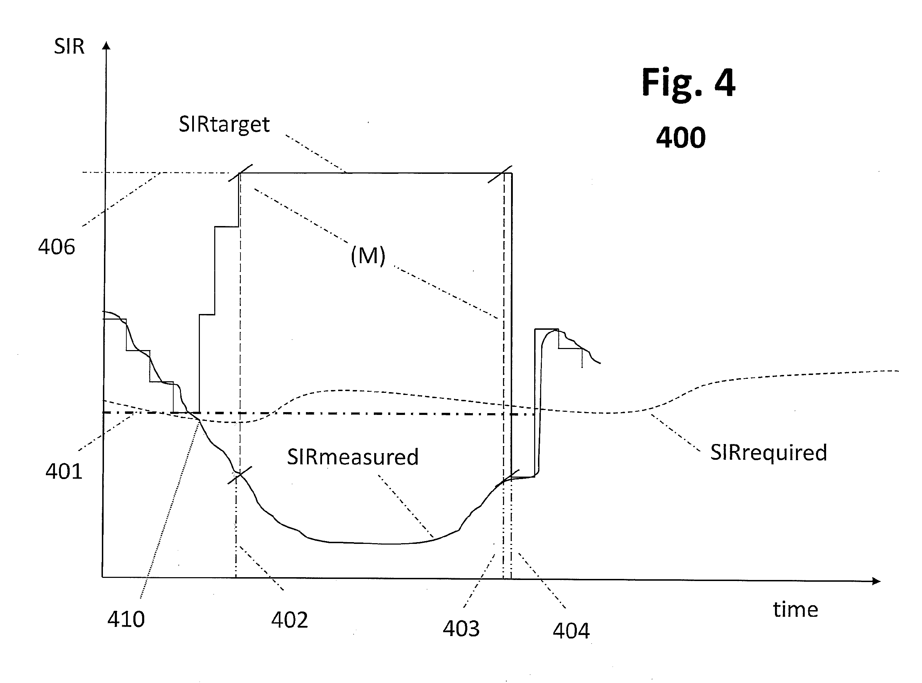

Following the course of these phenomena, from the time the normal mode is abandoned and for the purpose of re-adjusting the power level corresponding to a desired signal-to-interference ratio target (SIR_{target}) suitable for outer-loop power control in normal mode, the steps taking place in the controller (201) according to the object of the invention are those detailed in diagram (300) of Figure 3. In block (301), the desired signal-to-interference ratio target (SIR_{target}) in wind-up mode is calculated according to known algorithms, then an unwinding detector (302) is enabled for determining the end of the wind-up and the beginning of the unwinding and in the last block (303), the desired signal-to-interference ratio target (SIR_{target}) is modified such that it is adjusted to a suitable value for outer-loop power control operating in normal mode. The modification of said desired signal-to-interference ratio target (SIR_{target}) at the beginning of the unwinding is the object of this invention and is shown in Figure 4 explained below.

At the start of the unwinding condition in the evolution of power control over time and this starting point having been detected as the end of the wind-up condition, which has also been previously detected by a known mechanism such as that described in patent application US2003148769, the method object of the invention modifies the desired signal-to-interference ratio target (SIR_{target}), giving it a value that is equal or as close as possible to the original value (401) that it had prior to the beginning (402) of the wind-up of the outer loop. This value (401) is the last correct value of the desired signal-to-interference ratio target (SIR_{target}) established before abandoning the execution of outer-loop power control in normal mode, so that the variation of the desired signal-to-interference ratio target (SIR_{target}) and therefore of the power level determined by the normal mode of the outer loop continues immediately after leaving the wind-up situation.

Now focusing on Figure 4, it is considered that the last correct value (401) is the value existing before the wind-up situation. During wind-up, the value of the desired signal-to-interference ratio target (SIR_{target}) is incorrect because all the mechanisms operating during the wind-up mode are responsible for limiting or canceling outer-loop power control so that the desired signal-to-interference ratio target (SIR_{target}) does not continue to increase indefinitely. This Figure 4 also shows with a dotted line the so-called required desired signal-to-interference ratio (SIR_{required}), which is defined as a theoretical minimum of the received desired signal-to-interference ratio fulfilling the target frame error rate. The measured desired signal-to-interference ratio (SIR_{rmeasured}) is also depicted with a solid line, and this ratio is a real estimation of the received desired signal-to-interference ratio carried out first by the controller (201) of the base station or mobile in the radio network.

In order to choose this last correct value (401) of the desired signal-to-interference ratio target (SIR_{target}), the method of the invention proposes the following mechanism, preferably applicable if wind-up detection has been provided using a detection margin (M) between said desired signal-to-interference ratio target (SIR_{target}) and the received desired signal-to-interference ratio, as specified in Figure 4. In this case, the detection of the wind-up situation by the detector (302) occurs at the beginning (402) of the wind-up of the outer loop. Said detector (302) subsequently also determines the end of the wind-up mode and thus detects the beginning (403) of the unwinding. At this point (403), this mechanism reduces the desired signal-to-interference ratio target (SIR_{target}) by an amount equal to the detection margin (M). This mechanism thus allows the value of the desired signal-to-interference ratio target (SIR_{target}) to again take a value that is very close to the original value (401) that it had prior to the beginning (402) of the wind-up and before a quality degradation starts (410).

As can be seen in graph (400) of Figure 4, at point (404) immediately after the beginning (403) of the unwinding, the value of the desired signal-to-interference ratio target (SIR_{target}) obtained after subtracting the detection margin (M) from the set value (406) during the wind-up, which can be a fixed value or a value varying within a limit according to the wind-up mechanism applied, is slightly below the required desired signal-to-interference ratio (SIR_{required}), which involves a slight quality loss in the channel, but this quality decrease will be very brief since, as has already been mentioned, the known outer-loop power control hop algorithm is very fast when the desired signal-to-interference ratio target (SIR_{target}) must be later increased. In addition, this slight quality loss during a brief time period cannot be observed by the end user because in his or her communication during the entire duration of the wind-up phenomenon, for example, if the user has gone into an elevator while taking on the mobile phone, he or she has had an even more degraded quality. Any reduction greater or less than said detection margin (M) is considered to be covered by this invention.

The great advantage involved in the new unwinding mechanism included in the proposed method for wireless communication systems lies in the fact that it drastically reduces the convergence time of the outer-loop power control at the end of the wind-up state and as a result, it prevents unnecessary interferences reducing the capacity of the system.

The previous design has been used to describe the principles of the invention, nevertheless other alternatives which are not detailed herein but incorporate the same essence and purpose are possible. For example, although the invention has been illustrated herein by means of discrete functional blocks which can be executed in a wireless communications network controller (201), the functions of any of these blocks can be carried out using one or several suitably programmed processors.

In the same line, the invention can be applied for other standards apart from WCDMA, as well as for the power control of any signal received by base stations and by the user terminal equipment or mobile stations.

The terms in which this specification has been drafted must always be considered in a broad and non-limiting sense.

## Claims

1. An outer-loop power control method for CDMA technology-based wireless communication systems, comprising the following phases:
estimating a received desired signal-to-interference ratio based on a received data signal (107, 108) coming from a base station (102, 103) or from a mobile station (104),
establishing a first desired signal-to-interference ratio target (SIR_{target}) that is an estimation of a required desired signal-to-interference ratio (SIR_{required}) during the normal mode of the outer loop,
detecting (402) the wind-up of the outer loop,
establishing a second desired signal-to-interference ratio target (SIR_{target}) during the wind-up of the outer loop,
detecting the beginning (403) of the unwinding of the outer loop, **characterized by** further comprising modifying the second desired signal-to-interference ratio target (SIR_{target}) at the beginning (403) of the unwinding of the outer loop so as to adjust its value for outer-loop power control in normal mode, which is the mode being before detecting (402) the wind-up of the outer loop and before a quality degradation starts (410).

2. An outer-loop power control method for wireless communication systems according to claim 1, **characterized in that** at the beginning (403) of the unwinding of the outer loop, the value of the second desired signal-to-interference ratio target (SIR_{target}) is adjusted to an estimation of an original value (401) established before detecting (402) the wind-up of the outer loop.

3. An outer-loop power control method for wireless communication systems according to claim 1, **characterized in that** it detects (402) the wind-up of the outer loop when the difference between the second desired signal-to-interference ratio target (SIR_{target}) and the received desired signal-to-interference ratio exceeds a certain detection margin (M) of the wind-up of the outer loop.

4. An outer-loop power control method for wireless communication systems according to claims 2 and 3, **characterized in that** at the beginning (403) of the unwinding of the outer loop, the original value (401) is estimated by subtracting the detection margin (M) from the second desired signal-to-interference ratio target (SIR_{target}).

5. An outer-loop power control device for wireless communication systems, **characterized in that** it comprises at least one programmable electronic device operating according to the method described in any of claims 1 to 4.

6. An outer-loop power control device for wireless communication systems according to claim 5, **characterized in that** the programmable electronic device is selected from a general purpose processor, a digital signal processor, an application-specific integrated circuit and a programmable card or any combination of the above.

7. An outer-loop power control device for wireless communication systems according to claims 5 or 6, **characterized in that** it comprises a radiofrequency receiver (203) capable of receiving a data signal (107, 108) coming from a base station (102, 103) or from a mobile station (104) of the wireless communication system.

8. An outer-loop power control device for wireless communication systems according to any of claims 5 to 7, **characterized in that** it comprises a radiofrequency transmitter (202) capable of sending power control information to a base station (102, 103) or to a mobile station (104) of the wireless communication system.

9. An outer-loop power control device in a wireless communication system according to any of claims 5 to 8, incorporated in a wireless communications network controller.

10. An outer-loop power control device in a wireless communication system according to any of claims 5 to 8, incorporated in a mobile station for wireless communications systems.

## Patentansprüche

1. Außenschleifen-Leistungssteuerungsverfahren für auf der CDMA-Technologie basierende drahtlose Kommunikationssysteme, mit den folgenden Schritten:
Schätzen eines empfangenen gewünschten Signal-/Rausch-verhältnisses auf der Basis eines empfangenen Datensignals (107, 108), das von einer Basisstation (102, 103) oder von einer mobilen Station (104) kommt,
Erstellen eines ersten gewünschten Signal-/Rauschverhältnis-Ziels (SIR_{target}), bei dem es sich um eine Schätzung eines erforderlichen gewünschten Signal-/Rauschverhältnisses (SIR_{required}) während des Normalmodus der Außenschleife handelt,
Erkennen (402) des Wind-Up der Außenschleife,
Erstellen eines zweiten gewünschten Signal-/Rauschverhältnis-Ziels (SIR_{target}) während des Wind-Up der Außenschleife,
Erkennen des Beginns (403) des Unwinding der Außenschleife,
**dadurch gekennzeichnet, dass** es ferner das Modifizieren des zweiten gewünschten Signal-/Rauschverhältnis-Ziels (SIR_{target}) zu Beginn (403) des Unwinding der Außenschleife aufweist, um dessen Wert für die Außenschleifen-Leistungssteuerung im Normalmodus anzupassen, bei welchem es sich um den Modus vor dem Erkennen (402) des Wind-Up der Außenschleife und vor dem Beginn (410) einer Qualitätsverschlechterung handelt.

2. Außenschleifen-Leistungssteuerungsverfahren für drahtlose Kommunikationssysteme nach Anspruch 1, **dadurch gekennzeichnet, dass** zu Beginn (403) des Unwinding der Außenschleife der Wert des zweiten gewünschten Signal-/Rauschverhältnis-Ziels (SIR_{target}) an eine Schätzung eines Ursprungswerts (401) angepasst wird, welche vor dem Erkennen (402) des Wind-Up der Außenschleife vorgenommen wurde.

3. Außenschleifen-Leistungssteuerungsverfahren für drahtlose Kommunikationssysteme nach Anspruch 1, **dadurch gekennzeichnet, dass** es das Wind-Up der Außenschleife erkennt (402), wenn die Differenz zwischen dem zweiten gewünschten Signal-/Rauschverhältnis-Ziel (SIR_{target}) und dem empfangenen gewünschten Signal-/Rauschverhältnis eine bestimmte Erkennungsmarge (M) des Wind-Up der Außenschleife überschreitet.

4. Außenschleifen-Leistungssteuerungsverfahren für drahtlose Kommunikationssysteme nach den Ansprüchen 2 oder 3, **dadurch gekennzeichnet, dass** zu Beginn (403) des Unwinding der Außenschleife der Ursprungswert (401) durch Subtrahieren der Erkennungsmarge (M) von dem zweiten gewünschten Signal-/Rauschverhältnis-Ziel (SIR_{target}) geschätzt wird.

5. Außenschleifen-Leistungssteuerungsvorrichtung für drahtlose Kommunikationssysteme, **dadurch gekennzeichnet, dass** sie mindestens eine programmierbare elektronische Vorrichtung aufweist, die nach dem in einem der Ansprüche 1 bis 4 beschriebenen Verfahren arbeitet.

6. Außenschleifen-Leistungssteuerungsvorrichtung für drahtlose Kommunikationssysteme nach Anspruch 5, **dadurch gekennzeichnet, dass** die programmierbare elektronische Vorrichtung unter einem Allzweckprozessor, einem Digitalsignalprozessor, einer applikationsspezifischen integrierten Schaltung und einer programmierbaren Karte oder einer beliebigen Kombination der Genannten gewählt ist.

7. Außenschleifen-Leistungssteuerungsvorrichtung für drahtlose Kommunikationssysteme nach einem der Ansprüche 5 oder 6, **dadurch gekennzeichnet, dass** sie einen Funkfrequenzempfänger (203) aufweist, der in der Lage ist, ein von einer Basisstation (102, 103) oder von einer mobilen Station (104) des drahtlosen Kommunikationssystems kommendes Datensignal (107, 108) zu empfangen.

8. Außenschleifen-Leistungssteuerungsvorrichtung für drahtlose Kommunikationssysteme nach einem der Ansprüche 5 bis 7, **dadurch gekennzeichnet, dass** sie einen Funkfrequenzsender (202) aufweist, der in der Lage ist, Leistungssteuerungsinformationen an eine Basisstation (102, 103) oder eine mobile Station (104) des drahtlosen Kommunikationssystems zu senden.

9. Außenschleifen-Leistungssteuerungsvorrichtung für drahtlose Kommunikationssysteme nach einem der Ansprüche 5 bis 8, das in einem Controller für ein drahtloses Kommunikationsnetzwerk vorgesehen ist.

10. Außenschleifen-Leistungssteuerungsvorrichtung für drahtlose Kommunikationssysteme nach einem der Ansprüche 5 bis 8, das in einer mobilen Station für ein drahtloses Kommunikationsnetzwerk vorgesehen ist.

## Revendications

1. Procédé de régulation de puissance par boucle externe pour systèmes de communication sans fil basés sur la technologie CDMA, comprenant les phases suivantes:
estimer un rapport signal sur interférence reçu souhaité sur la base d'un signal de données (107, 108) reçu provenant d'une station de base (102, 103) ou d'une station mobile (104),
établir un premier rapport cible signal sur interférence souhaité (SIRtarget) qui est une estimation d'un rapport signal sur interférence souhaité requis (SIRreq) pendant le mode normal de la boucle externe,
détecter (402) l'enroulement de la boucle externe,
établir un second rapport cible signal sur interférence souhaité (SIRtarget) au cours de l'enroulement de la boucle externe,
détecter le début (403) du déroulement de la boucle externe,
**caractérisé en ce qu'**il comprend en outre la modification du deuxième rapport cible signal sur interférence souhaité (SIRtarget) au début (403) du déroulement de la boucle externe de façon à ajuster sa valeur de régulation de puissance par boucle externe en mode normal, qui est le mode étant avant la détection (402) de l'enroulement de la boucle externe et avant qu'une dégradation de la qualité commence (410).

2. Procédé de régulation de puissance par boucle externe pour systèmes de communication sans fil selon la revendication 1, **caractérisé en ce qu'**au début (403) du déroulement de la boucle externe, la valeur du deuxième rapport cible signal sur interférence souhaité (SIRtarget) est ajustée à une estimation d'une valeur d'origine (401) établie avant la détection (402) de l'enroulement de la boucle externe.

3. Procédé de régulation de puissance par boucle externe pour systèmes de communication sans fil selon la revendication 1, **caractérisé en ce qu'**il détecte (402) l'enroulement de la boucle externe lorsque la différence entre le second rapport cible signal sur interférence souhaité (SIRtarget) et le rapport signal sur interférence reçu souhaité dépasse une marge de détection certaine (M) de l'enroulement de la boucle externe.

4. Procédé de régulation de puissance par boucle externe pour systèmes de communication sans fil selon les revendications 2 et 3, **caractérisé en ce qu'**au début (403) du déroulement de la boucle externe, la valeur d'origine (401) est estimée en soustrayant la marge de détection (M) à partir du second rapport cible signal sur interférence souhaité (SIRtarget).

5. Dispositif de régulation de puissance par boucle externe pour les systèmes de communication sans fil, **caractérisé en ce qu'**il comprend au moins un dispositif électronique programmable fonctionnant selon le procédé décrit dans l'une quelconque des revendications 1 à 4.

6. Dispositif de régulation de puissance par boucle externe pour systèmes de communication sans fil selon la revendication 5, **caractérisé en ce que** le dispositif électronique programmable est choisi parmi un processeur d'usage général, un processeur de signal numérique, un circuit intégré spécifique à une application et une carte programmable ou une combinaison quelconque de ce qui précède.

7. Dispositif de régulation de puissance par boucle externe pour systèmes de communication sans fil selon les revendications 5 ou 6, **caractérisé en ce qu'**il comprend un récepteur radiofréquence (203) apte à recevoir un signal de données (107, 108) provenant d'une station de base (102 , 103) ou d'une station mobile (104) du système de communication sans fil.

8. Dispositif de régulation de puissance par boucle externe pour systèmes de communication sans fil selon l'une quelconque des revendications 5 à 7, **caractérisé en ce qu'**il comprend un émetteur radiofréquence (202) capable d'envoyer une information de régulation de puissance à une station de base (102, 103) ou à une station mobile (104) du système de communication sans fil.

9. Dispositif de régulation de puissance par boucle externe dans un système de communication sans fil selon l'une quelconque des revendications 5 à 8, incorporé dans un contrôleur de réseau de communication sans fil.

10. Dispositif de régulation de puissance par boucle externe dans un système de communication sans fil selon l'une quelconque des revendications 5 à 8, incorporé dans une station mobile pour système de communication sans fil.
